# EUROPEAN PATENT APPLICATION

(11) **EP 1 967 062 A1**
(43) Date of publication of application: **10.09.2008**
(21) Application number: 07103790.7
(22) Date of filing: 08.03.2007
(51) Int. Cl.: A01G 1/06, A01G 5/00, A01G 7/00, A01G 7/06, A01H 4/00

(54) **Method and system for removing undesired plant parts**

(71) Applicant: Nederlandse Organisatie voor Toegepast-Natuurwetenschappelijk Onderzoek TNO, 2628 VK Delft (NL)
(72) Inventor: Zeelen, Ronald, 2614 TB Delft (NL); van Zwet, Erwin John, 2645 LR Delfgauw (NL)
(74) Representative: van Loon, C.J.J.

(57) **Abstract**

Method and system for removing undesired plant parts (9). A first cap (7) and means (13) are provided for lowering that cap over the supposed plant parts location, pushing downwards any leafs (8) etc. around the supposed plant parts location. Means (15) are provided for making at least one image of the supposed plant parts location from several sides through the cap. Processing means (3) process the image(s) of the supposed plant parts location and localize any plant part to be removed. Means (16) are provided for excising any plant part through the first cap under control of said processing means (3). A second cap (14) may be provided extending outside and arranged co-movable with the first cap (7). The means for making at least one image of the supposed plant parts location and the means for excising any plant part to be removed reside inside the gap between the first cap and the second cap.

## Description

### Field of the invention

The invention concerns a method for removing undesired plant parts like buds, runners etc., by means of a suitable system.

### Background of the invention

"Plant fluffing", i.e. removal of undesired buds, runners etc. from plants, e.g. chrysanthemum or rose, is a labor intensive and tiresome work: buds etc. are removed manually in a face down position.

### Summary of the invention

The invention aims to provide a method and a system for automatic "plant fluffing", as a result of which the labor intensive and tiresome work can be taken over by a system.

It is preferred that the method comprises next steps:
- determining the location of supposed plant parts;
- lowering a cap over the supposed plant parts location, thus pushing away any leafs surrounding the supposed plant parts location;
- make at least one image of the supposed plant parts location from several sides through the cap;
- localize any plant part to be removed by processing said at least one image;
- excise any plant part to be removed using means which are capable to excise those plant part or plant parts through the first cap under control of the processed at least one image.

Accordantly, a system arranged for performing this method preferrably comprises next means:
- means for determining the location of supposed plant parts;
- a first cap and means for lowering that cap over the supposed plant parts location, pushing downwards any leafs etc. around the supposed plant parts location;
- means for making at least one image of the supposed plant parts location from several sides through the cap;
- processing means for processing the at least one image of the supposed plant parts location and for localizing any plant part to be removed;
- means for excising any plant part to be removed which are arranged to excise those plant part or plant parts through the first cap under control of said processing means.

The (first) cap which is placed over the plant (part) pushes away any leafs etc. around the supposed plant parts location, both the leafs etc. of the plant which is processed at that moment and those of the surrounding plants. After that the cap - and the plant parts - remain unmovable until the "fluffing" process of that plant has been completed.

To enable the means for making at least one image of the supposed plant parts location through the first cap as well as the means for excising any plant part to be removed to move around the outer surface of that cap without being hindered by surrounding plant parts like leaves etc., it is preferred to provide a second, outer cap, extending outside and arranged co-movable with the first cap. The means for making at least one image of the supposed plant parts location and the means for excising any plant part to be removed preferrably reside inside the gap between the first, inner cap and the second, outer cap.

It may be preferred the first and/or second cap to be of a substantially cylindrical shape.

Preferably the means for determining the location of supposed plant parts comprise drive means which are arranged to position the system - i.e. the relevant system modules - to predetermined coordinates which correspond with or are at least derived from the position of the individual plants. Often the position of the individual plants are known beforehand, i.e. from a cultivation plan which comprises data w.r.t. the rather exact location of each individual plant, e.g. within a greenhouse.

The means for making at least one image of the supposed plant parts location from several sides through the cap may comprise at least one image sensor which is arranged be moved along the outside of the cap under control of first position control means. As a preferred example the cap is a transparent cap and the means for making at least one image of the supposed plant parts location comprises at least one camera. As an alternative the cap might be not transparent but "permeable" for alternative detection means as e.g. radar type or sonar type or other image detectors.

Preferably, the processing means are arranged for processing the at least one image of the supposed plant parts location and position data from said first position control means such that the exact position of any plant part is determined. The processing means process the image information from the image sensor(s), camera(s) or other kind of image detector(s) related to the position of the image detector, derived from the first position control means. When the processing means conclude the presence of an undesired bud or plant part at a certain position, this position is transmitted - e.g. via a data buffer - to second position control means.

In this preferred way the means for excising any plant part to be removed are arranged to excise those plant part or plant parts under control of the processing means and second position control means, the latter being responsible for the control of the excision means.

The means for excising any plant part to be removed may comprise means for transmitting a high energy beam causing those plant part or plant parts to be burned off. As an example a laser source could be used, which is able to transmit a high-energetic beam via the (transparent or at least translucent) first cap to the bud or plant part and to excise it by burning off.

Alternatively the means for excising any plant part to be removed may comprise means for transmitting a high pressure fluid beam causing those plant part or plant parts to be cut off. In that case the first cap has to be made of a special permeable material, e.g. comprising a grid of holes through which the pressurized fluid can be squirted. Besides, the second position control means, responsible for the control and operation of the pressurized fluid, has to know and to take into account the exact location of each hole in order to be able to prevent that the fluid beam is hindered by the cap wall outside the holes provided in it.

The high pressurized fluid may comprise a growth inhibiting agent, in order to prevent re-sprouting of the excised butt.

### Exemplary Embodiment

Figure 1 shows an exemplary embodiment of the the system according to the invention;
Figure 2 shows the same embodiment more in detail.

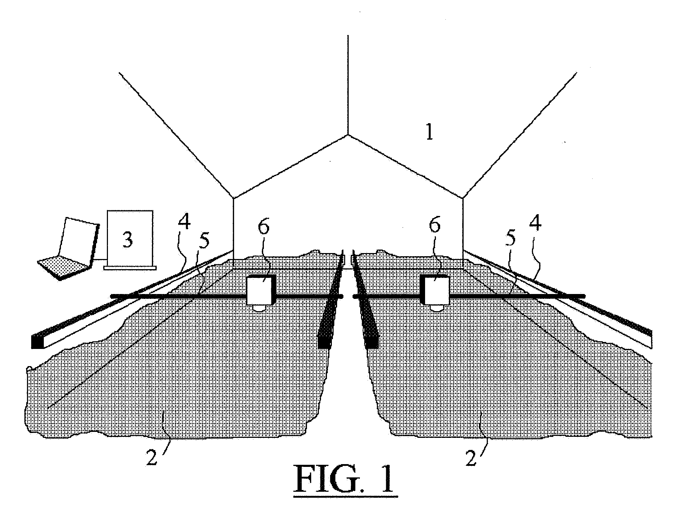

Figure 1 shows a greenhouse 1 for growing plants 2. The individual plants 2 normally will be planted according to a predetermined, regular pattern, the data of which may be present in a computerized greenhouse management system 3, which thus can be used as (as mendtioned in the preceding discussion) the means for determining the location of supposed plant parts: the determination of the location of supposed plant parts simply is performed by reading out or computing the x-y data of the individual plants from te data stored in computer 3.

The greenhouse 1 comprises a transportation system, schematically indicated by a system of mutually perpendicular guiding bars 4 and 5 etc. which is capable to position a module 6 which is used for the execution of the further steps of the invention. It is noted that several assemblies 4,5,6 may be installed within a greenhouse 1 and that several modules 6 may simultaneously be in operation.

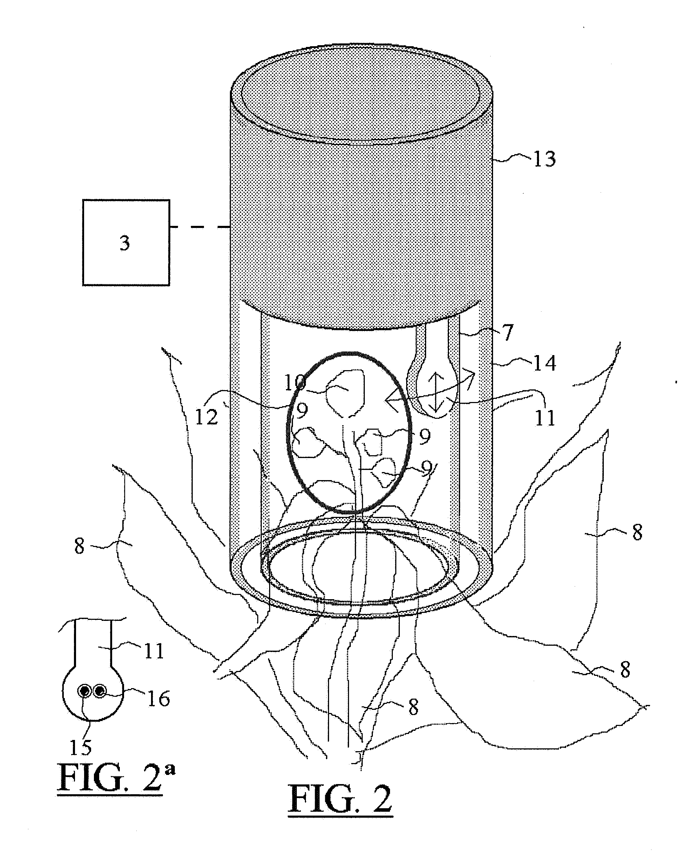

Figure 2 shows schematically module 6 which is used for the execution of the further steps of the invention. Not shown are means by which module 6 is (e.g. slidably) connected the relevant bar 5; such a construction is deemed to be within the capabilities of persons skilled in the art.

Module 6 comprises a first cap 7 and means (not shown explicidly) for lowering that cap over the supposed plant parts location (derived from computer 3), pushing downwards any leafs 8 etc. around the location where possible undesired plant parts, like flower buds 9, are supposed to reside and thus making those undesired plant parts better visible. It is noted that in this exemplary embodiment it is deemed that all side buds 9 have to be removed from the plant in favor of the grow of one flower bud 10.

The module 6 moreover comprises a module 11 which is arranged for making at least one image of the location 12 where the buds 9 and 10 reside, from several sides, through the cap 7. Means for driving the module 11 may reside in the upper part 13 of module 6, which drive means, e.g. comprising a stepper motor with an appriote driver etc., are capable for letting the module 11 circle around the outside of cap 7.

Images which are picked up by module 11 can be processed in processing means, e.g. image processing software incorporated in computer 3 and for localizing any bud 9 to be removed.

After having localized the buds 9 to be removed, means have to be provided to remove or excise those undesired buds. Those removing means arranged to excise the buds 9 localized by the module 11 and the software in computer 3 have to be arranged that they are capable to excise those buds 9 through the cap 7, under control of said processing means. The excising means may e.g. comprise a laser beam generator. To enable the means for making images of the buds 9 and the means for excising the buds 9 may both be housed within the module 11, which is capable to be moved around, upwards and and downwards (see arrows) under control of control hardware and software as represented in figure 1 by the computer system 3. So first the imaging means, e.g. a normal digital minicamera, is moved first to localize the undesired buds, whilst next the excising means, e.g. a laser diode, is moved into the right positions and energized subsequently under control of the control hardware and software to excise the undesired buds 9.

Figure 2a shows part of module 11 more in detail at the side which in use is directed towards the inside of cap 7. Figure 2a shows that module 11 comprises a digital camera 15 and a laser 16, side by side. As both, camera 15 and laser 16, in fact are electro-optical convertors (camera 15 from optical-to-electrical and laser 16 electrical-to-optical) both could be combined by one single electro-optical conversion module which in one step is used as a camera, to make pictures of the plant parts 9 and 10, and in a subsequent step as a laser, to generate a laser beam to "shoot off" the undesired buds 9.

To enable the module 11 to move around the outer surface of cap 7 without being hindered by surrounding plant parts like leaves 8 etc., a second, outer cap 14, extending outside and arranged co-movable with the first cap 7. The means for making at least one image of the supposed plant parts location and the means for excising any plant part to be removed, housed in module 11 reside inside the gap between the first, inner cap 7 and the second, outer cap 14.

The cap 7 may be a transparent cap and the means for making at least one image of the supposed plant parts location comprises at least one camera. As an alternative the cap 7 might be not transparent but "permeable" for alternative detection means as e.g. radar type or sonar type or other image detectors.

## Claims

1. Method for removing undesired plant parts like buds, runners etc., by means of a suitable system, the method comprising next steps:
- determining the location of supposed plant parts;
- lowering a cap (7) over the supposed plant parts location, thus pushing away any leafs (8) surrounding the supposed plant parts location;
- make at least one image of the supposed plant parts location from several sides through the cap;
- localize any plant part (9) to be removed by processing said at least one image;
- excise any plant part to be removed using means which are capable to excise those plant part or plant parts through the cap under control of the processed at least one image.

2. System for removing undesired plant parts, performing the method according to claim 1, the system comprising
- means (3) for determining the location of supposed plant parts (12);
- a first cap (7) and means (13) for lowering that cap over the supposed plant parts location, pushing downwards any leafs (8) etc. around the supposed plant parts location;
- means (15) for making at least one image of the supposed plant parts location from several sides through the cap;
- processing means (3) for processing the at least one image of the supposed plant parts location and for localizing any plant part to be removed;
- means (16) for excising any plant part to be removed which are arranged to excise those plant part or plant parts through the first cap under control of said processing means (3).

3. System according to claim 2, comprising a second cap (14), extending outside and arranged co-movable with the first cap (7), the means for making at least one image of the supposed plant parts location and/or the means for excising any plant part to be removed residing inside the gap between the first cap and the second cap.

4. System according to claim 2, wherein the means for determining the location of supposed plant parts comprise drive means (4,5) which are arranged to position the system to predetermined coordinates which correspond with or are at least derived from the position of the individual plants.

5. System according to claim 2, wherein the means (15) for making at least one image of the supposed plant parts location from several sides through the first cap comprise at least one image sensor which is arranged be moved along the outside of the first cap (7) under control of position control means (13).

6. System according to claim 2, wherein the processing means are arranged for processing the at least one image of the supposed plant parts location and position data from said first position control means such that the exact position of any plant part (9,10) is determined.

7. System according to claim 2, wherein the means (16) for excising any plant part to be removed which are arranged to excise those plant part or plant parts under control of said processing means and position control means (13).

8. System according to claim 4, wherein the first cap is a transparent cap and the means for making at least one image of the supposed plant parts location comprises at least one camera.

9. System according to claim 6, wherein the means for excising any plant part to be removed comprise means for transmitting a high energy beam causing those plant part or plant parts to be burned off.

10. System according to claim 6, wherein the means for excising any plant part to be removed comprise means for transmitting a high pressure fluid beam causing those plant part or plant parts to be cut off.

11. System according to claim 9, wherein the high pressurized fluid comprises a growth inhibiting agent.
